(19) **Europäisches Patentamt / European Patent Office / Office européen des brevets**

(11) **EP 3 163 585 B1**

(12) **EUROPEAN PATENT SPECIFICATION**

(45) Date of publication and mention
of the grant of the patent:
**09.05.2018 Bulletin 2018/19**

(51) Int Cl.:
**H01B 9/00** *(2006.01)*  **G02B 6/44** *(2006.01)*

(21) Application number: **15192484.2**

(22) Date of filing: **02.11.2015**

(54) **RFS CABLE INFRASTRUCTURE FOR REMOTE RADIO HEAD DEPLOYMENTS**

RFS-KABELINFRASTRUKTUR FÜR ENTFERNTE FUNKKOPFEINSÄTZE

INFRASTRUCTURE À CÂBLES RFS POUR DES DÉPLOIEMENTS DE TÊTE RADIO À DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.05.2017 Bulletin 2017/18**

(73) Proprietor: **Alcatel-Lucent Shanghai Bell
Shanghai 201206 (CN)**

(72) Inventors:
• **ZORAD, Robert
30179 Hannover (DE)**

• **BRUNSCH, Dietmar
30179 Hannover (DE)**
• **MAHLANDT, Erhard
30179 Hannover (DE)**

(74) Representative: **Wetzel, Emmanuelle et al
Nokia Solutions and Networks GmbH & Co. KG
Intellectual Property Business Group
70430 Stuttgart (DE)**

(56) References cited:
**US-A1- 2013 294 735**

# Description

## Technical Field

The disclosure relates to mobile telecommunication systems, and more particularly to a hybrid cable for transmitting electrical power and data in a mobile telecommunication system.

## Background

Cellular base stations utilizing Remote Radio Heads (RRH) need links between the Base band Unit (BBU) and the individual RRHs. A cost effective solution to connect the RRHs to the BBU is the use of hybrid cables. The new generation of cellular base stations (4G LTE) have higher power supply and cable requirements. Due to the specific kind of RF modulation of radio remote heads the input power is not constant but pulsed. A pulsed current on the power cable causes an additional voltage drop Ud on the power supply cable depending on the gradient of current change. Consequently an optimum power supply cable for remote heads should have a low inductance.

US 2013/294735 A1 discloses a hybrid cable assembly including a hybrid cable, tether tubes, and an overmold. The hybrid cable includes both electrical-conductor and fiber-optic elements. The tethers receive a subset of the elements from the hybrid cable at a transition location in the form of a chamber, and the overmold surrounds the transition location. The overmold is elongate, flexible, and has a low profile configured to pass through narrow ducts.

## Summary

Various embodiments provide a hybrid cable for transmitting electrical power and data in a mobile telecommunication system and a base station as described by the subject matter of the independent claims. Advantageous embodiments are described in the dependent claims.

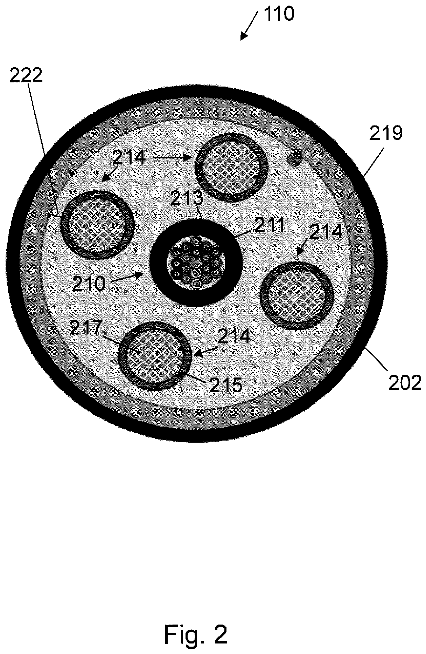

In some embodiments, a hybrid cable for transmitting (e.g. to multiple remote radio units) electrical power and data in a mobile telecommunication system is disclosed. The hybrid cable comprises a plurality of cable elements surrounded by a conductive armor within a first jacket. The plurality of cable elements comprise electrical conductors and at least one optical conductor. Each of the plurality of cable elements comprises a core surrounded by a second jacket (e.g. 215 of Fig. 2) for insulation purpose. The conductive armor provides a common neutral conductor for the electrical conductors, where the conductive armor is branched out at opposite ends of the hybrid cable into individual neutral conductors associated with the respective electrical conductors. The optical conduction may comprise an optical fiber. The conductive armor may for example comprise a tubular conductor. The conductive armor is surrounded by the first jacket. The first jacket may be of a tubular form (e.g. a tube). The number of individual neutral conductors coming from the conductive armor is the same number of electrical conductors.

By way of example, the mobile telecommunication system may be a Long Term Evolution (LTE) communication system, Universal Mobile Telecommunications System (UMTS) or any communication system that is using radio equipment and/or involving base stations.

The present cable design enables to use individual power wires inside the hybrid cable as a life conductor and the armor as a single common combined neutral conductor. The present structure of the hybrid cable may provide a compact structure with less cable elements compared to conventional cables. For example, the present cable structure may enable to achieve large wire cross sections at a comparable cable diameter allowing for longer distance e.g. between power supply unit and remote radio heads. For example, a cylindrical conductor inside a tubular conductor leads to a significantly reduced inductivity thus reducing the voltage drop due to the pulsed power consumption. Consequently the length of the hybrid cable can be increased furthermore with the same diameter of hybrid cable.

With the present design or structure of the hybrid cable the induced voltage drop may be reduced by approx. 30% and more. However, with the reduced voltage drop the length of the hybrid cable may be in average improved by 10%-20% compared with conventional cables.

Thus, the present cable design may find the best hybrid cable design in terms of low inductance and cost efficiency.

According to one embodiment, each of the electrical conductors has (or is equipped with) a respective circuit breaker for separately controlling flow of current through each of the electrical conductors. This may be realized using the individual neutral conductors. Every neutral conductor may form an electrical circuit with associated electrical conductor. This may enable using a compact structure of the hybrid cable while still having an individual control of the current flowing in the electrical conductors.

According to one embodiment, the electrical conductors are disposed symmetrically on opposite sides of the optical conductor. The electrical conductors are concentric around the optical conductor. Optical conductors are sensitive to bending. Having cables surrounding the optical conductor may provide protection and may increase stiffness of the optical conductor. This may reduce the risk of bending and breaking of the optical conductor. Having a symmetric structure may enable to reach a maximum cross section for each of the electrical conductors and may thus increase the length of the hybrid cable. This is in contrast to the case where the electrical conductors are randomly disposed such that only part of the electrical conductors may reach the maximum cross section.

According to one embodiment, the armor is preferably a flexible tube (e.g. a hollow tube). The armor may for example comprise a corrugated tube, interlocked or smooth. Having a hollow tubular form may enable enough space inside the armor for increasing the cross sections of the electrical conductors. In one embodiment, the armor is of copper, aluminum, silver, gold, steel, or their composite alloys.

According to one embodiment, the hybrid cable is configured for transmitting the electrical power as a direct current (DC) or alternating current. This may provide a multifunctional cable for transmitting both data and current.

According to one embodiment, the hybrid cable is a -24V DC cable and preferably a -48 V DC cable. This may enable the supply or power to remote radio heads as the remote radio heads/units require a separate 48 V DC voltage supply.

According to one embodiment, each of the electrical conductors having a distance to the conductive armor that is smaller than a predefined maximum distance. The predefined maximum distance may be between 0 and 0.5mm. This may have the advantage of controlling the inductance of the hybrid cable. In other words, the smallest distance between the outer surface of each electrical conductor of the electrical conductors and the conductive armor is smaller than predefined maximum distance.

Further, the inductance may be additionally controlled or improved if the thickness of the second jacket that insulates the core of the electrical conductors is kept as small as possible (in the range between 0.2mm and 0.8mm).

For example, the hybrid cable has an outer diameter of 1/2-inch, 7/8-inch or 11/4-inch.

In some embodiments, a base station is disclosed. The base station is comprising at least the cable described above, one baseband unit, BBU, a power supply unit, PSU, and multiple remote radio units, RRUs, wherein the optical conductor of the hybrid cable is connecting the BBU to the multiple RRUs for transmitting data and wherein the electrical and neutrals conductors are connecting the PSU to each of the multiple RRUs for transmitting electrical power.

This embodiment may have the advantage of increasing the radio coverage of the base station in that more RRUs can be connected. This is in contrast to a conventional cable using the same length of the cable and can only connect fewer RRUs. For example, the hybrid cable having an outer diameter of 7/8 inch is configured to connect the BBU and PSU to at least 8 RRUs with the present design.

Another advantage may be that this embodiment may enable a flexible installation or deployment of the base station in that the length of the hybrid cable may be longer than in the conventional cables.

According to one embodiment, the hybrid cable is configured to separately control flow of current to each of the RRUs through the hybrid cable using the circuit breakers. This embodiment may enable a controlled coverage access to the base station. Switching individually the RRUs may for example enable switching off some RRUs if there is no need for high radio coverage areas and switching them on back if the coverage area is to be increased.

According to one embodiment, the base station further comprises a base station tower, wherein the RRUs are attached to the base station tower at a location near the top of the base station tower and wherein the BBU and PSU are positioned at a location near the bottom of the tower, wherein the circuit breakers are positioned near the bottom of the tower. This embodiment may save processing time that would otherwise be required if the circuit breakers are positioned at the top of the base station tower.

## Brief description of the drawings

In the following embodiments of the invention are explained in greater detail, by way of example only, making reference to the drawings in which:

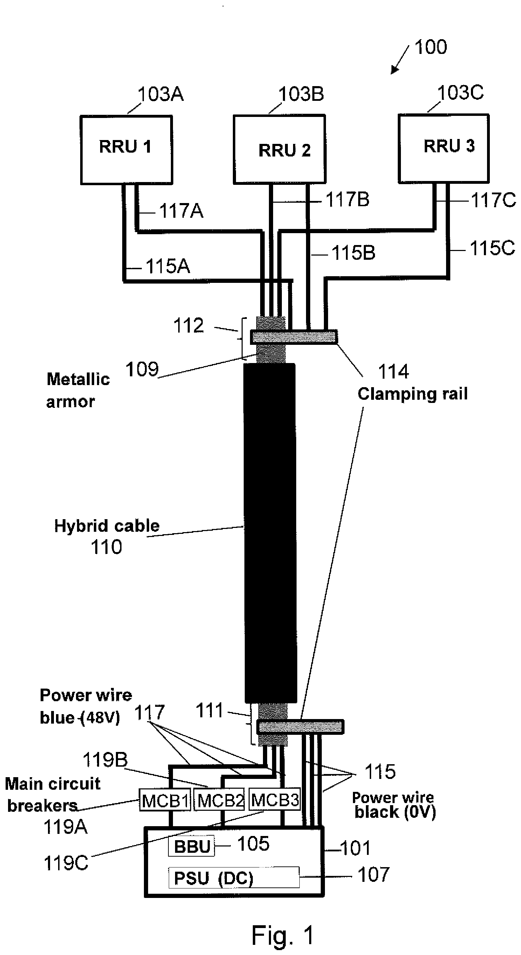

Figure 1 shows schematically a block diagram of a base station of a radio communication system according to an example of the present disclosure, and Figure 2 shows schematically a block diagram of a cross-sectional view of a hybrid cable according to an example of the present disclosure.

## Detailed description

In the following, like numbered elements in these figures are either similar elements or perform an equivalent function. Elements which have been discussed previously will not necessarily be discussed in later figures if the function is equivalent.

Due to the DC-resistance of the electrical conductors the operational voltage e.g. at the remote head is smaller than the output voltage of the power supply at the bottom of the tower. To limit the voltage drop caused by the electrical conductor a certain conductor cross section of the electrical conductor is required. However, at a given maximum outer diameter of the hybrid cable the maximum cross section of the individual electrical conductor is limited by the available space inside the hybrid cable. Therefore also the maximum distance between power supply unit and remote head is limited accordingly.

Another aspect to be considered for the power supply of remote radio heads is the inductance of the power cable. Due to the specific kind of RF modulation of remote radio heads the input power is not constant but pulsed. A pulsed current on the power cable causes an additional voltage drop Ud on the power supply cable depending on the gradient of current change. Consequently an optimum power supply cable for remote radio heads should have a low inductance.

Generally, the power cable voltage drop is defined as $\Delta U = 2* I* R_{Cable}$, where I is the current flowing in the cable and $R_{cable}$ is the cable resistance.

However; the cable inductance induces additional losses increasing the total voltage drop

$$\Delta U = 2 * I * R_{Cable} + L * \frac{di}{dt}.$$ Thus a lower inductance causes a lower voltage drop.

**Figure 1** shows schematically a block diagram of a base station 100 according to a further preferred embodiment of the invention. The base station 100 comprises a base station rack BSR, 101 and multiple radio remote units 103A-C such as radio remote heads RRHs. For exemplification purpose only three RRUs are shown. Each of the radio remote units 103A-C comprises one or several antennas for radio links between the radio remote units 103A-C and one or several mobile stations such as mobiles, notebooks or PDAs (PDA = personal digital assistant). In further alternatives, the base station 100 may comprise two radio remote units or more than three radio remote units. Each of the RRUs may serve a radio cell or a sector of a radio cell of the mobile telecommunication system.

The BSR 101 comprises a base band unit BBU 105 and a power supply unit PSU 107. BBU 105 and PSU 107 may be connected to the RRUs 103A-C via a single hybrid cable 110. The hybrid cable 110 is described with reference to Figure 2. The power supply units PSU 107 provide an operating voltage or a voltage (using direct current or alternating current) feed for each of the radio remote units 103A-C via electrical conductors (collectively referred to by 117), armor 109 and neutral conductors (collectively referred to by 115). The base band unit BBU 105 is adapted to provide signaling data or user data to be transmitted to the mobile stations or signaling data to be transmitted to the radio remote units 103A-C and is adapted to receive signaling data or user data to be received from the mobile stations or signaling data to be received from the radio remote units 103A-C via the electrical or optical conductors. The hybrid cable 110 may be used to transmit such data (user data and/or signaling data) via optical fibers from the BBU 105 to the RRUs 103A-C.

The hybrid cable 110 comprises armor (e.g. metallic armor) 109 that provides a common neutral conductor (or return path) for electrical conductors 117. The armor 109 extends a length between opposite ends 111 and 112. The hybrid cable 110 comprises at each opposite end 111 and 112 a clamping rail (e.g. of metal) 114 attached to or fixed on the armor 109 for branching the common armor 109 into individual neutral conductors 115A-C each associated with respective RRUs 103A-C. As illustrated in Figure 1, one part of the clamping rail 114 is clamped or connected to the armor 109 and the other part of the clamping rail 114 is connected to the individual neutral conductors 115A-C (e.g. the individual neutral conductors may be inserted in the other part).

Each of the electrical circuits formed by electrical conductors 117 and associated neutral conductors 115 may be protected by a circuit breaker 119A-C. Each of the circuit breakers 119A-C is connected on a respective electrical conductor 117A-C. Using the circuit breakers 119A-C, the flow of the current through respective electrical conductors may be controlled. A circuit breaker may for example be an automatically operated electrical switch designed to protect an electrical circuit from damage caused by overload or short circuit. Its basic function is to detect a fault condition and interrupt current flow.

The base station 100 may be connected to neighboring base stations or other network nodes of a radio communication system. The base station rack BSR 101 may be located for example at ground level and the radio remote units 103A-C may be located on top of a roof. For example, the circuit breakers 119A-C may be located in the vicinity of the BSR 101 at the ground level so as to enable an easy access to the circuit breakers 119A-C. This may enable for example to control in time the radio coverage of the base station 100 by controlling in time the circuit breakers 119A-C. This is in contrast to the case where the circuit breakers are located on top of the roof.

**Figure 2** shows schematically a block diagram of a cross-sectional view of a hybrid cable e.g. 110 (e.g. between the opposite ends) according to an example of the present disclosure.

The hybrid cable 110 includes a plurality of cable elements or cable units disposed within a first jacket 202 that surround the cable elements. The first jacket 202 is preferably a polymeric coating, such as polyethylene. Other materials may also be suitable materials for the first jacket 202, such as polypropylene, polyvinyl chloride (PVC), TPE, neoprene, polyurethane or fluoropolymers such as FEP and PFA. The first jacket material thickness can be from about J1min to J1max, where J1min= 0.2 mm and J1max= 1.5 mm.

The hybrid cable 110, while having a generally cylindrical profile, can have some flexibility. For example, the hybrid cable 110 can be bent upwards or downwards, thereby resulting in a curved shape in cross-section allowing the hybrid cable 110 to be conformed to a number of non-planar surfaces.

The plurality of cable elements may comprise at least two type of cable elements: at least a first cable element 210 of a first type for transmitting data and multiple second cable elements 214 of a second type for transmitting electrical power. Each cable element of the plurality of cable elements comprises a second jacket (e.g. for insulation) surrounding its respective core and positioned within the first jacket 202. The second jacket may in some embodiments be made of a foil, such as copper foil or aluminum foil. Other appropriate materials for shielding the power or signal transmission components within the cable element may also be utilized. The second jacket of the first cable element 210 may or may not have the same characteristics as second jacket of the multiple second cable elements 214. For example, the plurality of cable elements may be positioned in parallel within the hybrid cable. This may enable to achieve a large wire cross sections as compared to the case where the plurality of cable elements are randomly positioned within the hybrid cable. In one example, each of the electrical conductors may be placed within a distance or gap 222 that is between 0 and 0.5 mm. The distance between outer surfaces of the electrical conductors 214 and the armor may have impact on the inductance of the hybrid cable. By maintaining this distance as small as possible the inductance of the hybrid cable may be improved. For example, electrical conductors 214 may be placed in parallel closely to the armor 109.

The at least one first cable element 210 of the plurality of cable elements in the hybrid cable 110 includes a core part consisting of optical fibers 211 surrounded by second jacket 213. The optical fibers 211 is monomode or multimode fibers and their technological derivatives, coated with the second jacket 213 having polymeric material or being polymeric tubes with or without gel. The optical fibers 211 can be optical fibers having a fiber coating diameter of 250 $\mu$m or 900 $\mu$m.

The multiple second cable elements 214 of the plurality of cable elements in the hybrid cable 110 include electrical conductors e.g. 117A-C. Each of the electrical conductors 214 is formed with an outer insulating coating i.e. a second jacket 215 and a metallic core 217 of suitable conductivity, such as copper, aluminum, copper-plated aluminum, copper-plated steel, silver, gold, and their composite alloys. Electrical conductor 214 may be in the form of single conductor such as a stranded conductor.

Second cable elements 214 and first cable element 210 are surrounded by an armor 219 (or 109), wherein the armor 219 is surrounded by the first jacket 202. The armor 219 is preferably a substantially flexible tube, such as, for example, a corrugated tube of copper, aluminium, silver, gold, steel, or their composite alloys.

Although shown in circular form, the electrical conductors 214 (117) may have other shapes or forms such as quad or triangular shape.

List of reference numerals

| | |
|---|---|
| 100 | base station |
| 101 | base station rack |
| 103A-C | RRU |
| 105 | BBU |
| 107 | power supply unit |
| 109 | armor |
| 110 | hybrid cable |
| 111 | bottom end |
| 112 | upper end |
| 114 | clamping rail |
| 115 | neutral cables |
| 117 | electrical cables |
| 119 | circuit breakers |
| 202 | first jacket |
| 210 | first cable unit/element |
| 211 | optical fibers |
| 213 | second jacket |
| 214 | second cable units/elements |
| 215 | second jacket |
| 217 | core |
| 219 | armor |
| 222 | distance |

**Claims**

1. A hybrid cable (110) for transmitting electrical power and data in a mobile telecommunication system, the hybrid cable (110) comprising a plurality of cable elements (210, 214) surrounded by a conductive armor (219, 109) within a first jacket (202), the plurality of cable elements comprising electrical conductors (214, 117) and at least one optical conductor (210); **characterized in that** the conductive armor (219, 109) providing a common neutral conductor for the electrical conductors (214), where the conductive armor (219, 109) is branched out at opposite ends (111, 112) of the hybrid cable (110) into individual neutral conductors (115) associated with the respective electrical conductors (117).

2. The cable of claim 1, wherein each of the electrical conductors has a respective circuit breaker for separately controlling flow of current through each of the electrical conductors.

3. The cable of claim 2, wherein the circuit breakers are placed at one of the free ends of the hybrid cable.

4. The cable of claim 1, wherein the electrical conductors are disposed in a symmetric manner around the optical conductor.

5. The cable of claim 1, wherein the armor is a flexible tube.

6. The cable of claim 1, wherein the armor is of copper, aluminum, silver, gold, steel, or their composite alloys.

7. The cable of claim 1, the hybrid cable being configured for transmitting the electrical power as a direct current, DC, or alternating current.

8. The cable of claim 7, the hybrid cable is a -48 V DC cable.

9. The cable of claim 1, each of the electrical conductors having a distance to the conductive armor that is smaller than a predefined maximum distance between 0 and 0.5mm.

10. The cable of claim 1, further comprising two clamping rails, wherein the conductive armor is branched out at opposite ends using the clamping rails fixed at both ends.

11. The cable of claim 1, wherein the electrical conductors, the conductive armor and the first jacket are concentric around the optical conductor.

12. A base station comprising at least a cable according to any one of the previous claims, one baseband unit, BBU, a power supply unit, PSU, and multiple remote radio units, RRUs, and the optical conductor of the hybrid cable is connecting the BBU to the multiple RRUs for transmitting data and wherein the electrical and neutrals conductors are connecting the PSU to each of the multiple RRUs for transmitting electrical power.

13. The base station of claim 12, the hybrid cable being configured to separately control flow of current to each of the RRUs through the hybrid cable using the circuit breakers.

14. The base station of claim 12, the hybrid cable having an outer diameter of 7/8 inch, wherein the hybrid cable is configured to connect the BBU to at least 8 RRUs.

15. The base station of claim 12, further comprising a base station tower, wherein the RRUs are attached to the base station tower at the top of the base station tower and wherein the BBU and PSU are positioned at the bottom of the tower, wherein the circuit breakers are positioned at the bottom of the tower.

**Patentansprüche**

1. Hybridkabel (110) zum Übertragen von elektrischem Strom und Daten in einem Mobilfunksystem, wobei das Hybridkabel (110) eine Vielzahl von Kabelelementen (210, 214) umfasst, die von einem leitfähigen Panzer (219, 109) in einem ersten Mantel (202) umgeben sind, wobei die Vielzahl von Kabelelementen elektrische Leiter (214, 117) und wenigstens einen optischen Leiter (210) umfasst; **dadurch gekennzeichnet, dass** der leitfähige Panzer (219, 109) einen gemeinsamen Neutralleiter für die elektrischen Leiter (214) bereitstellt, wobei der leitfähige Panzer (219, 109) sich an gegenüberliegenden Enden (111, 112) des Hybridkabels (110) in einzelne Neutralleiter (115) verzweigt, die den jeweiligen elektrischen Leitern (117) zugehörig sind.

2. Kabel nach Anspruch 1, wobei jeder der elektrischen Leiter einen jeweiligen Stromunterbrecher zum separaten Steuern des Stromflusses durch jeden der elektrischen Leiter aufweist.

3. Kabel nach Anspruch 2, wobei die Stromunterbrecher an einem der freien Enden des Hybridkabels angeordnet sind.

4. Kabel nach Anspruch 1, wobei die elektrischen Leiter in symmetrischer Weise um den optischen Leiter herum angeordnet sind.

5. Kabel nach Anspruch 1, wobei der Panzer ein flexibles Rohr ist.

6. Kabel nach Anspruch 1, wobei der Panzer aus Kupfer, Aluminium, Silber, Gold, Stahl oder ihren Verbundlegierungen hergestellt ist.

7. Kabel nach Anspruch 1, wobei das Hybridkabel zum Übertragen des elektrischen Stroms als einen Gleichstrom, DC, oder Wechselstrom konfiguriert ist.

8. Kabel nach Anspruch 7, wobei das Hybridkabel ein -48-V-DC-Kabel ist.

9. Kabel nach Anspruch 1, wobei jeder der elektrischen Leiter einen Abstand zum leitfähigen Panzer aufweist, der kleiner als ein vorgegebener Maximalabstand zwischen 0 und 0,5 mm ist.

10. Kabel nach Anspruch 1, ferner umfassend zwei Klemmschienen, wobei der leitfähige Panzer an gegenüberliegenden Enden mithilfe der an beiden Enden fixierten Klemmschienen verzweigt ist.

11. Kabel nach Anspruch 1, wobei die elektrischen Leiter, der leitfähige Panzer und der erste Mantel um den optischen Leiter herum konzentrisch sind.

12. Basisstation, umfassend wenigstens ein Kabel nach einem beliebigen der vorstehenden Ansprüche, eine Basisbandeinheit, BBU, ein Netzteil, PSU, und mehrere Remote-Funkeinheiten, RRUs, und wobei der optische Leiter des Hybridkabels die BBU mit den mehreren RRUs verbindet, um Daten zu übertragen, und wobei die elektrischen und Neutralleiter das PSU mit den einzelnen RRUs verbinden, um elektrischen Strom zu übertragen.

13. Basisstation nach Anspruch 12, wobei das Hybridkabel dazu konfiguriert ist, mithilfe von Stromunterbrechern Stromfluss durch das Hybridkabel an jede der RRUs separat zu steuern.

14. Basisstation nach Anspruch 12, wobei das Hybridkabel einen Außendurchmesser von 7/8 Zoll aufweist, wobei das Hybridkabel dazu konfiguriert ist, die BBU mit wenigstens 8 RRUs zu verbinden.

15. Basisstation nach Anspruch 12, ferner umfassend einen Basisstationsmast, wobei die RRUs an der Oberseite des Basisstationsmasts am Basisstationsmast angebracht sind und wobei die BBU und das PSU an der Unterseite des Masts angeordnet sind, wobei die Stromunterbrecher an der Unterseite des Masts angeordnet sind.

## Revendications

1. Câble hybride (110) destiné à transmettre l'alimentation électrique et des données dans un système de télécommunications mobiles, le câble hybride (110) comprenant une pluralité d'éléments de câble (210, 214) entourés d'une armature conductrice (219, 109) à l'intérieur d'une première gaine (202), la pluralité d'éléments de câble comprenant des conducteurs électriques (214, 117) et au moins un conducteur optique (210) ; **caractérisé en ce que** l'armature conductrice (219, 109) fournit un conducteur neutre commun aux conducteurs électriques (214), l'armature conductrice (219, 109) se ramifiant aux extrémités opposées (111, 112) du câble hybride (110) en conducteurs neutres individuels (115) associés aux conducteurs électriques respectifs (117).

2. Câble selon la revendication 1, dans lequel chacun des conducteurs électriques dispose d'un disjoncteur respectif pour contrôler séparément la circulation du courant à travers chacun des conducteurs électriques.

3. Câble selon la revendication 2, dans lequel les disjoncteurs sont placés à l'une des extrémités libres du câble hybride.

4. Câble selon la revendication 1, dans lequel les conducteurs électriques sont disposés de façon symétrique autour du conducteur optique.

5. Câble selon la revendication 1, dans lequel l'armature est un tube flexible.

6. Câble selon la revendication 1, dans lequel l'armature est constituée de cuivre, d'aluminium, d'argent, d'or, d'acier ou de leurs alliages composites.

7. Câble selon la revendication 1, le câble hybride étant configuré pour transmettre l'alimentation électrique sous forme de courant continu, CC, ou de courant alternatif.

8. Câble selon la revendication 7, le câble hybride étant un câble 48 V CC.

9. Câble selon la revendication 1, chacun des conducteurs électriques se situant à une distance de l'armature conductrice qui est inférieure à une distance maximale prédéfinie entre 0 et 0,5 mm.

10. Câble selon la revendication 1, comprenant en outre deux barres de serrage, dans lequel l'armature conductrice se ramifie aux extrémités opposées à l'aide des barres de serrage fixées aux deux extrémités.

11. Câble selon la revendication 1, dans lequel les conducteurs électriques, l'armature conductrice et la première gaine sont concentriques autour du conducteur optique.

12. Station de base comprenant au moins un câble selon l'une quelconque des revendications précédentes, une unité de bande de base, BBU, une unité d'alimentation électrique, PSU, et de multiples unités radio déportées, RRU, et le conducteur optique du câble hybride raccorde la BBU aux multiples RRU pour transmettre des données et dans laquelle les conducteurs électriques et neutres raccordent la PSU à chacune des multiples RRU pour transmettre l'alimentation électrique.

13. Station de base selon la revendication 12, le câble hybride étant configuré pour contrôler séparément la circulation du courant à travers le câble hybride vers chacune des RRU à l'aide des disjoncteurs.

14. Station de base selon la revendication 12, le câble hybride ayant un diamètre extérieur de 7/8 pouce, dans laquelle le câble hybride est configuré pour raccorder la BBU à au moins 8 RRU.

15. Station de base selon la revendication 12, comprenant en outre une tour de téléphonie cellulaire, dans laquelle les RRU sont fixées à la tour de téléphonie cellulaire au sommet de la tour de téléphonie cellulaire et dans laquelle la BBU et la PSU sont positionnées à la base de la tour, dans laquelle les disjoncteurs sont positionnés à la base de la tour.

100

103A
RRU 1

103B
RRU 2

103C
RRU 3

117A

117B

117C

115C

115A

115B

112

109

114
Clamping rail

Metallic
armor

Hybrid cable
110

Power wire
blue (48V)

117

111

119B

Main circuit
breakers

119A

MCB1 MCB2 MCB3

115

Power wire
black (0V)

BBU — 105

119C

101

PSU (DC)

107

Fig. 1

Fig. 2

EP 3 163 585 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013294735 A1